# EUROPEAN PATENT APPLICATION

(11) **EP 2 738 358 A1**
(43) Date of publication of application: **04.06.2014**
(21) Application number: 13192885.5
(22) Date of filing: 14.11.2013
(51) Int. Cl.: F01D 11/00, F01D 25/24, F02C 7/28, F16J 15/32

(54) **Turbomachine component including a seal member**

(30) Priority: 29.11.2012 US 201213689257
(71) Applicant: General Electric Company, Schenectady, New York 12345 (US)
(72) Inventor: Sha, Karimulla Shaik, 560066 Bangalore (IN); Ahmed, Sayed Murtuza, Bangalore (IN); Shariff, Shoib Ahmed, 560066 Bangalore (IN)
(74) Representative: Cleary, Fidelma

(57) **Abstract**

A turbomachine component includes a first housing portion 31 having a first end 57 that extends to a second end 59. At least one of the first and second ends 57, 59 includes a first sealing surface 63 having a seal receiving passage 66. A second housing portion 32 includes a first end that extends to a second end. At least one of the first and second ends 70, 72 includes a second sealing surface 76 configured and disposed to register with the first sealing surface 76. A seal member 90 is provided in the seal receiving passage 66. The seal member 90 includes a plurality of bristles 96 that extend toward the second sealing surface 76.

## Description

The subject matter disclosed herein relates generally to the art of turbomachines and, more particularly, to a seal member for a turbomachine component.

Many turbomachines include a compressor portion linked to a turbine portion through a common compressor/turbine shaft or rotor and a combustor assembly. The compressor portion guides a compressed air flow through a number of sequential stages toward the combustor assembly. In the combustor assembly, the compressed air flow mixes with a fuel to form a combustible mixture. The combustible mixture is combusted in the combustor assembly to form hot gases. The hot gases are guided to the turbine portion through a transition piece. The hot gases expand through the turbine portion rotating turbine blades to create work that is output, for example, to power a generator, a pump, or to provide power to a vehicle. In addition to providing compressed air for combustion, a portion of the compressed airflow is passed through the turbine portion for cooling purposes.

In many cases, the turbine blades are arranged in a housing including first and second housing halves joined along a horizontal joint. Other turbomachine components, such as the compressor portion, may also include horizontal joints. In addition to horizontal joints, several turbomachine components, such as the combustor assembly include first and second housing halves joined along an axial joint. Regardless of the orientation, a seal is provided between the housing halves to limit leakage of turbomachine fluids. Generally, the seal is formed from a flexible metal that accommodates thermal expansion and contraction of the first and second housing halves resulting from temperature differences that arise during operation of the turbomachine.

According to one aspect of the present invention, a turbomachine component includes a first housing portion having a first end that extends to a second end. At least one of the first and second ends includes a first sealing surface having a seal receiving passage. A second housing portion includes a first end that extends to a second end. At least one of the first and second ends includes a second sealing surface configured and disposed to register with the first sealing surface. A seal member is provided in the seal receiving passage. The seal member includes a plurality of bristles that extend toward the other of the first and second seal receiving passages.

According to another aspect of an exemplary embodiment, a turbomachine includes a compressor portion, a turbine portion fluidically connected, and mechanically linked, to the compressor portion, and a combustor assembly fluidically connected to the compressor portion and the turbine portion. At least one of the compressor portion, the turbine portion, and the combustor assembly includes a first housing portion having a first end that extends to a second end. At least one of the first and second ends includes a first sealing surface having a seal receiving passage. The at least one of the compressor portion, the turbine portion, and the combustor assembly also includes a second housing portion having a first end that extends to a second end. At least one of the first and second ends includes a second sealing surface configured and disposed to register with the first sealing surface. A seal member is provided in the seal receiving passage. The seal member includes a plurality of bristles that extend toward the other of the first and second seal receiving passages.

Various advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of a gas turbomachine including turbomachine component having a seal member in accordance with an exemplary embodiment;
FIG. 2 is a partial perspective view of a compressor casing including first and second housing portions joined through a seal member in accordance with an exemplary embodiment;
FIG. 3 is a partial perspective view of the seal member of FIG. 2;
FIG. 4 is a partial perspective view of a combustor of the gas turbomachine of FIG. 1 including first and second housing portions joined through a seal member in accordance with another aspect of an exemplary embodiment; and
FIG. 5 is a partial perspective view of the seal member of FIG. 4.

The detailed description explains embodiments of the invention, together with advantages and features, by way of example with reference to the drawings.

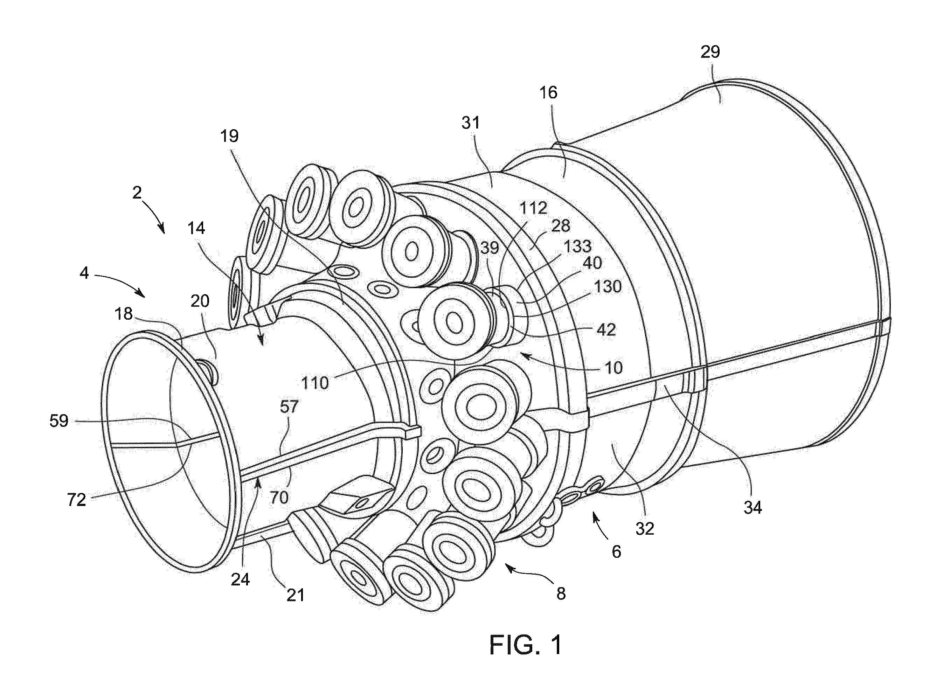

A gas turbomachine in accordance with an exemplary embodiment is indicated generally at 2 in FIG. 1. Gas turbomachine 2 includes a compressor portion 4 operatively connected to a turbine portion 6. A combustor assembly 8 is fluidically connected to compressor portion 4 and turbine portion 6. Combustor assembly 8 includes a plurality of combustors, one of which is indicated at 10, arranged in a can-annular array. Of course it should be understood that the number and arrangement of combustors 10 may vary. Combustor assembly 8 is fluidically connected to turbine portion 6 through a transition piece (not shown). Compressor portion 4 includes a plurality of compressor stages (not shown) housed within a compressor casing 14 and turbine portion 6 includes a plurality of turbine stages (also not shown) housed within a turbine casing 16.

Compressor casing 14 includes a forward compressor end section 18 that extends to an aft compressor end section 19 along a substantially longitudinal axis. Compressor casing 14 also includes a first compressor housing portion 20 and a second compressor housing portion 21. First compressor housing portion 20 is joined to second compressor housing portion 21 through a substantially horizontal joint 24. Similarly, turbine casing 16 includes a forward turbine end section 28 that extends to an aft turbine end section 29 along the longitudinal axis. Turbine casing 16 also includes a first turbine housing portion 31 and a second turbine housing portion 32. First turbine housing portion 31 is joined to second turbine housing portion 32 along a substantially horizontal joint 34. Also illustrated in FIG. 1, combustor 10 includes a first combustor housing portion 39 joined to a second combustor housing portion 40 through a generally annular joint 42.

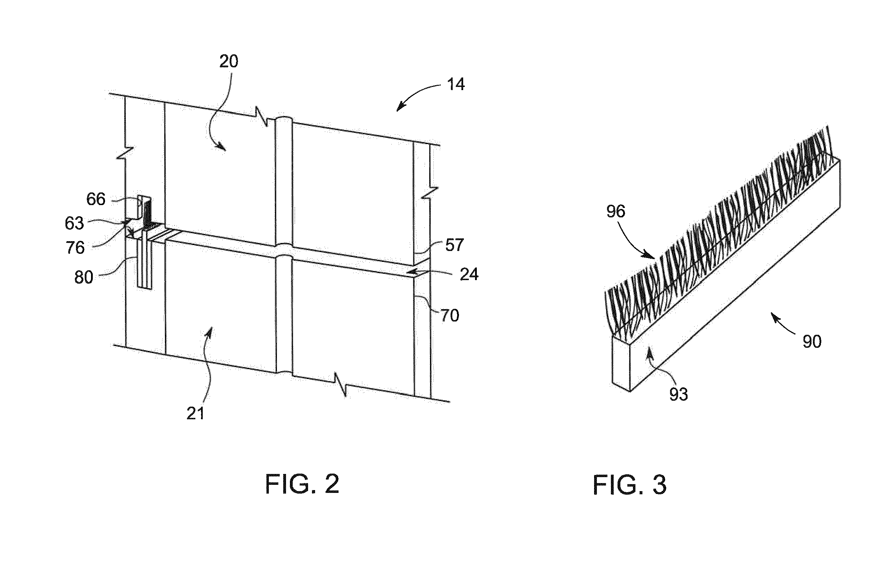

Reference will now be made to FIG. 2 in describing details of compressor casing 14 with an understanding that turbine casing 16 may include similar structure. First compressor housing portion 20 includes a first end 57 that extends to a second end 59. First end 57 includes a sealing surface 63 that extends along the longitudinal axis between forward compressor end section 18 and aft compressor end section 19. Sealing surface 63 includes a first seal receiving passage 66. Second end 59 includes a similar sealing surface (not shown). Second compressor housing portion 21 includes a first end 70 that extends to a second end 72. First end 70 includes a sealing surface 76 that extends along the longitudinal axis between forward compressor end section 18 and aft compressor end section 19. Sealing surface 76 includes a second seal receiving passage 80.

In accordance with an exemplary embodiment, a seal member 90 extends between first seal receiving passage 66 and second seal receiving passage 80 along horizontal joint 24. More specifically, seal member 90 includes a flange 93 mounted in second seal receiving passage 80. As best shown in FIG. 3, flange 93 supports a plurality of bristles 96 that extend into first seal receiving passage 66. Bristles 96 are densely packed to reduce any escape of fluids from compressor portion 4 through horizontal joint 24. In accordance with an aspect of the exemplary embodiment, bristles 96 are formed from ferrous, e.g., steel and/or alloys of steel. Of course other materials such as ceramics, ceramic composites, and non-ferrous metals may also be employed in the fabrication of bristles 96. Bristles 96 are relatively flexible so as to accommodate any differences in thermal expansion between first compressor housing portion 20 and second compressor housing portion 21 resulting from operation of gas turbomachine 2. At this point it should be understood that while described as sealing between two compressor housing halves, seal member 90 may also be employed to seal between any number of housing portions that combine to form compressor casing 14, turbine casing 16, and/or an exhaust assembly (not separately labeled).

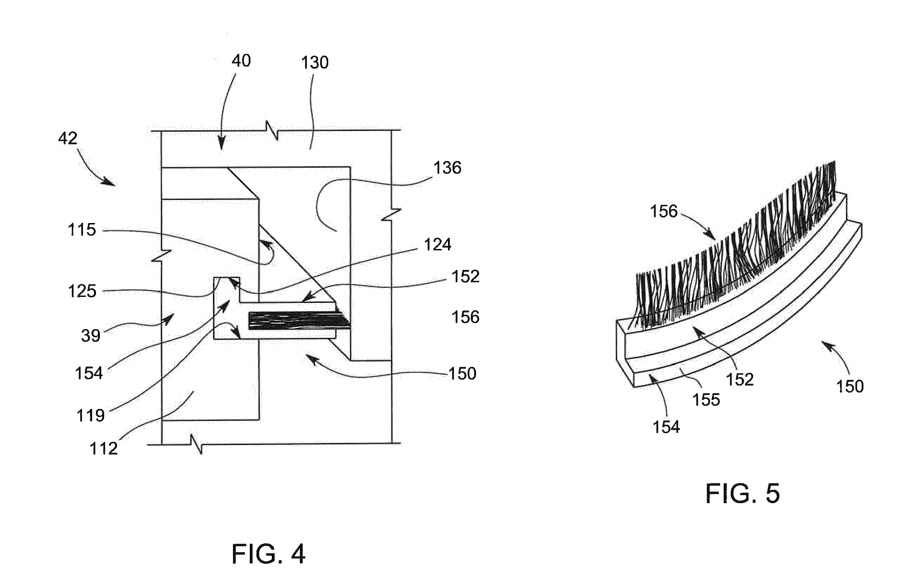

Reference will now follow to FIG. 4 in describing generally annular joint 42. As shown, first combustor housing portion 39 includes a first end section 110 having a generally annular opening (not separately labeled) that extends to a second end section 112. Second end section 112 includes a generally annular opening (also not separately labeled) that is configured to receive first end section 110. Second end section 112 includes a sealing surface 115 having a seal receiving passage 119. Seal receiving passage 119 includes a recess portion 124 that forms a keyway 125. Second combustor housing portion 40 includes a first end section 130 that extends to a second end section 133. First end section 130 includes a recess (not separately labeled) that defines, at least in part, a sealing surface 136. With this arrangement, second end section 112 of first combustor housing portion 39 is received within first end section 130 of second combustor housing portion 40. A seal member 150 is arranged at a generally annular joint 42 to limit escape of gases from combustor 10.

As shown in FIG. 5, seal member 150 extends between seal receiving passage 119 and sealing surface 136 and extends about generally annular joint 42. More specifically, seal member 150 includes a flange 152 mounted in seal receiving passage 119. Flange 152 includes an arcuate profile that generally corresponds to a geometry of second end section 112. In addition, flange 152 includes a mounting element 154 that takes the form of a key 155 configured to extend into, and matingly engage with, recess portion 124. Flange 152 supports a plurality of bristles 156 that extend toward and abut sealing surface 136. Bristles 156 are densely packed to reduce any escape of fluids from combustor 10 through generally annular joint 42. In a manner similar to that described above, bristles 156 are formed from ferrous, e.g., steel and/or alloys of steel. Of course other materials such as ceramics, ceramic composites, and non-ferrous metals may also be employed in the fabrication of bristles 156. Bristles 156 are relatively flexible so as to accommodate any differences in thermal expansion between first combustor housing portion 39 and second combustor housing portion 40 resulting from operation of gas turbomachine 2. While shown as being employed as an axial seal, seal member 150 may also be configured as a radial seal. When configured as a radial seal, the seal member may include bristles that extend radially inwardly or bristles that extend radially outwardly depending on seal member orientation. In addition, it should be understood that the housing could represent inner and/or outer flanges an exhaust assembly and that the seal member may also be employed to seal between the inner and/or outer flanges.

At this point it should be understood that the exemplary embodiments describe a seal member that includes bristles to limit flow of fluids through turbomachine joints. The seal member may be employed at joints having a generally liner geometry or joints having a generally curvilinear geometry. In addition while described as being employed between housing portions of a compressor casing and a combustor, the seal member may be used between a variety of surfaces, including between housing portions of a turbine casing or joints in other turbomachine components to limit fluid leakage. Finally, while the bristles may be formed from a variety of materials, the particular type of material chosen may be related to a particular application for the seal member.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A turbomachine component comprising:
   a first housing portion including a first end that extends to a second end, at least one of the first and second ends including a first sealing surface having a seal receiving passage;
   a second housing portion including a first end that extends to a second end, at least one of the first and second ends including a second sealing surface configured and disposed to register with the first sealing surface; and
   a seal member provided in the seal receiving passage, the seal member including a plurality of bristles that extend toward the second sealing surface.
2. The turbomachine component according to clause 1, wherein the seal member includes a flange that supports the plurality of bristles, the flange being received in the seal receiving passage.
3. The turbomachine component according to any preceding clause, wherein the flange includes a mounting element configured and disposed to be received in the seal receiving passage.
4. The turbomachine component according to any preceding clause, wherein the seal receiving passage includes a recess portion that extends into the one of the first and second sealing surfaces, the mounting element being configured and disposed to nest within the recess portion.
5. The turbomachine component according to any preceding clause, wherein the first housing portion includes a first end section that extends to a second end section along a generally longitudinal axis, the first and second sealing surfaces extending axially between the first and second end sections.
6. The turbomachine component according to any preceding clause, wherein the first and second housing portions form a compressor casing.
7. The turbomachine component according to any preceding clause, wherein the first and second sealing surfaces are configured and disposed to form a horizontal joint.
8. The turbomachine component according to any preceding clause, wherein the first sealing surface defines a first generally annular opening and the second sealing surface defines a second generally annular opening.
9. The turbomachine component of any preceding clause, wherein the first and second housing portions are joined to form a combustor casing.
10. The turbomachine component of any preceding clause, wherein the first and second sealing surfaces are configured and disposed to establish a generally annular joint.
11. The turbomachine component according to any preceding clause, wherein the second sealing surface includes another seal receiving passage, the seal member extending from the seal receiving passage into the another seal receiving passage.
12. A turbomachine comprising:
   a compressor portion;
   a turbine portion fluidically connected and mechanically linked to the compressor portion;
   a combustor assembly fluidically connected to the compressor portion and the turbine portion, at least one of the compressor portion, turbine portion, and combustor assembly comprising:
      a first housing portion including a first end that extends to a second end, at least one of the first and second ends including a first sealing surface having a seal receiving passage;
      a second housing portion including a first end that extends to a second end, at least one of the first and second ends including a second sealing surface configured and disposed to register with the first sealing surface; and
      a seal member provided in the first seal receiving passage, the seal member including a plurality of bristles that extend toward the second sealing surface.
13. The turbomachine according to any preceding clause, wherein the seal member includes a flange that supports the plurality of bristles, the flange being received in the seal receiving passage.
14. The turbomachine according to any preceding clause, wherein the flange includes a mounting element configured and disposed to be received in the seal receiving passage.
15. The turbomachine according to any preceding clause, wherein the seal receiving passage includes a recess portion that extends into the one of the first and second sealing surfaces, the mounting element being configured and disposed to nest within the recess portion.
16. The turbomachine according to any preceding clause, wherein the first housing portion includes a first end section that extends to a second end section along a generally longitudinal axis, the first and second sealing surfaces extending axially between the first and second end sections.
17. The turbomachine according to any preceding clause, wherein the first and second housing portions form a casing for the compressor portion.
18. The turbomachine according to any preceding clause, wherein the first and second sealing surfaces are configured and disposed to form a horizontal joint.
19. The turbomachine according to any preceding clause, wherein the first sealing surface defines a first generally annular opening and the second sealing surface defines a second generally annular opening.
20. The turbomachine according to any preceding clause, wherein the second sealing surface includes another seal receiving passage, the seal member extending from the seal receiving passage into the another seal receiving passage.

## Claims

1. A turbomachine component comprising:
a first housing portion (31) including a first end (57) that extends to a second end (59), at least one of the first and second ends (57, 59) including a first sealing surface (76) having a seal receiving passage (80);
a second housing portion (32) including a first end (57) that extends to a second end (59), at least one of the first and second ends (57, 59) including a second sealing surface (76) configured and disposed to register with the first sealing surface (76); and
a seal member (90) provided in the seal receiving passage (80), the seal member (90) including a plurality of bristles (96) that extend toward the second sealing surface (76).

2. The turbomachine component according to claim 1, wherein the seal member (90) includes a flange (93) that supports the plurality of bristles (96), the flange being received in the seal receiving passage (80).

3. The turbomachine component according to claim 2, wherein the flange (93) includes a mounting element (154) configured and disposed to be received in the seal receiving passage (80).

4. The turbomachine component according to claim 3, wherein the seal receiving passage (80) includes a recess portion (124) that extends into the one of the first and second sealing surfaces, the mounting element (154) being configured and disposed to nest within the recess portion (124).

5. The turbomachine component according to any preceding claim, wherein the first housing portion (31) includes a first end section that extends to a second end section along a generally longitudinal axis, the first and second sealing surfaces (76) extending axially between the first and second end sections.

6. The turbomachine component according to any preceding claim, wherein the first and second housing portions (31, 32) form a compressor casing (14).

7. The turbomachine component according to any preceding claim, wherein the first and second sealing surfaces (76) are configured and disposed to form a horizontal joint.

8. The turbomachine component according to any preceding claim, wherein the first sealing surface (76) defines a first generally annular opening and the second sealing surface (76) defines a second generally annular opening.

9. The turbomachine component of any preceding claim, wherein the first and second housing portions (31, 32) are joined to form a combustor casing.

10. The turbomachine component of any preceding claim, wherein the first and second sealing surfaces (76) are configured and disposed to establish a generally annular joint.

11. The turbomachine component according to any preceding claim, wherein the second sealing surface (76) includes another seal receiving passage (80), the seal member extending from the seal receiving passage into the another seal receiving passage.

12. A turbomachine (2) comprising:
a compressor portion (4);
a turbine portion (6) fluidically connected and mechanically linked to the compressor portion;
a combustor assembly (8) fluidically connected to the compressor portion (4) and the turbine portion (6), at least one of the compressor portion, turbine portion, and combustor assembly comprising:
a first housing portion (31) including a first end that extends to a second end, at least one of the first and second ends including a first sealing surface (76) having a seal receiving passage;
a second housing portion (32) including a first end that extends to a second end, at least one of the first and second ends including a second sealing surface (76) configured and disposed to register with the first sealing surface; and
a seal member (90) provided in the first seal receiving passage, the seal member including a plurality of bristles (96) that extend toward the second sealing surface.

13. The turbomachine (2) according to claim 12, wherein the seal member (90) includes a flange (93) that supports the plurality of bristles (96), the flange being received in the seal receiving passage (80).

14. The turbomachine (2) according to claim 13, wherein the flange (93) includes a mounting element (154) configured and disposed to be received in the seal receiving passage (80).

15. The turbomachine (2) according to any of claims 12 to 14, wherein the seal receiving passage (80) includes a recess portion (124) that extends into the one of the first and second sealing surfaces (76), the mounting element (154) being configured and disposed to nest within the recess portion.
